# NEW EUROPEAN PATENT SPECIFICATION

(11) **EP 1 216 145 B2**
(45) Date of publication and mention of the opposition decision: **26.10.2011**
(45) Mention of the grant of the patent: 02.08.2006
(21) Application number: 00964561.5
(22) Date of filing: 21.09.2000
(51) Int. Cl.: B32B 5/18, B32B 27/12

(54) **COVER FOR AEROBIC TREATMENT OF BIODEGRADABLE MATTER**
ABDECKUNG ZUR AEROBEN BEHANDLUNG VON BIOLOGISCH ABBAUBAREM MATERIAL
COUVERCLE POUR LE TRAITEMENT AEROBIE DE MATIERE BIODEGRADABLE

(30) Priority: 22.09.1999 US 401595
(43) Date of publication of application: 26.06.2002
(73) Proprietor: W.L. Gore & Associates GmbH, 85640 Putzbrunn (DE)
(72) Inventor: HOCHREIN, Kilian, Peter, 82211 Herrsching (DE); BAUER, Ambrosius, 83627 Warngau (DE)
(74) Representative: Shanks, Andrew
(86) International application number: PCT/IB2000/001436
(87) International publication number: WO 2001/021394

(56) References cited:
- EP-A- 0 962 313
- WO-A-97/15378
- WO-A1-97/15378
- DE-A- 4 231 414
- DE-A1- 4 231 414
- DE-A1- 19 620 109
- US-A- 4 780 211

## Description

### FIELD OF THE INVENTION

The invention relates to aerobic treatment of wastes and other materials containing biodegradable matter, such as is found in box composting; more particularly, to a cover which helps to control the emission of volatile substances, aerosols and particulates; more particularly odorous fumes and pathogens developed during decomposition of the waste and which provides good air exchange and water vapor transmission through the cover in such way that maximum operational reliability, product quality, and minimum investment and operating cost are achieved

### BACKGROUND OF THE INVENTION

There are a number of processes that are used for fermentative treatment of organic and industrial waste material in large volume. Containment of the waste is beneficial as it aids in controlling gas emission. Building structures, such as boxes used in box composting, are being used to an increasing extent.

These structures need ventilation in order to maintain the fermentation processes and/or a working environment. The resulting exhaust air is sometimes treated to reduce emissions. Common practice for these odor burdened air streams is the use of biofilters. Biofilters in the past have proven to be somewhat unpredictable in performance and sometimes costly to install. Overall, the addition of biofilters to any type of containment building structures adds to already high cost of installation and operation/maintenance.

Box composting for instance uses cover tarpaulins with controlled gas permeability. This setup largely simplifies the installation and operation effort necessary for environmentally sound treatment of such waste streams by obsoleting any end-of-pipe means of reducing emissions.

During box composting, the wastes being composted are introduced to a structure similar to a horizontal silo. One or more sides of this structure, and especially the roof, are constructed with a cover tarpaulin so as to define a gas space above the fermenting bulk matter relative to the outside air. The box composting structure includes appropriate ventilation devices, which permit full or partial flow of fresh air and/or recirculating air through the fermenting bulk, in order to supply the fermenting bulk with oxygen to maintain the fermentation process and to transport away liberated carbon dioxide and other fermentation gases.

The cover tarpaulin provides a barrier layer between the gas space and the outside air. An effective tarpaulin should protect the fermenting product from extreme dry-up in dry and hot climatic conditions. It should also protect the fermenting matter from wetting during precipitation when installed in a structure so that the tarpaulin is the uppermost shell. Both dry-out and excessive wetting would adversely affect the fermentation process and results.

Large amounts of precipitation also lead to disproportionately high volumes of seepage with a high load of dissolved or suspended organic substances. This seepage is a significant environmental hazard that is very costly to dispose of in a controlled manner.

Moreover, the cover tarpaulin should serve to retain undesired odorous substances that emerge from the fermenting product in significant amounts. Adequate odor retention is frequently crucial for obtaining the necessary permits for biological waste treatment installations. This is particularly true in Germany and many other European countries, where there are monitoring and regulative procedures regarding odor emissions and imissions.

The cover tarpaulins, in many cases, should also ensure that no health-relevant microbes or spores are emitted from the fermentation process. The cover tarpaulin should also prevent the surface of the fermenting material from being excessively cooled. This would restrict the aerobic fermentation process and prohibit complete destruction of weeds and pathogens as required by regulations in many countries. Covering the fermenting material with an air permeable tarpaulin and aerating with ventilation devices achieves weed and pathogen destruction without having to turn and mix the fermenting bulk several times during the process. Thus, covering significantly reduces emissions as compared to open heap composting, as well as it saves operating cost. By protecting the fermenting product from daylight, especially UV radiation, the surface of the fermented product can be populated by UV-sensitive fungi, which are crucial to the process in individual phases of fermentation.

In order to be able to maintain the aerobic nature of the fermentation process, a certain degree of ventilation through the tarpaulin is necessary for adequate oxygen supply of the fermenting organisms. In order to achieve the biologically needed oxygen supply with the least amount of energy and cost, the air flow needs to be induced into the heap as evenly as possible with the least overall system pressure loss.

Experience also shows that the air flow starts forming distinct channels in the fermenting bulk in applications where the fermenting bulk itself produces the dominant pressure loss of the air flow through the whole system. Channel formation results in uneven oxygen supply and promotes anoxic or anaerobic zones in the fermenting bulk causing unwanted emissions of methane, ammonia and odors. This means that the tarpaulin itself needs to be the dominant pressure loss in the system. In other words, the tarpaulin has to have the lowest air permeability of all system components along the flow of air.

Another important reason to limit the air permeability of the tarpaulin is the control of the fermenting process. In order to effectively manage moisture and oxygen supply, the pre-settings of the ventilation devices need to accurately correlate to the resulting air flow. Extremely high air permeability of the tarpaulin will avoid any measurable overpressure to build up underneath the tarpaulin. Thus, the resulting air flow will depend upon the pressure drop caused by the fermenting bulk. It is known that the pressure drop in the fermenting bulk largely depends on its structure and moisture content. Both are known to vary significantly from batch to batch and even over the time during which an individual batch is being processed. Thus, the process cannot be reliably controlled in terms of moisture and oxygen supply whenever the air permeability of the composting system is not governed by the tarpaulin.

Moreover, controlling the air flow means controlling the emission of odors. The gas space between the fermenting bulk and the tarpaulin is heavily burdened with odorous substances, a large portion of which are present in the gas phase. Any gas permeating from the gas space through the tarpaulin into the atmosphere therefore represents an emission of odorous. By using a cover with limited air permeability the flow of odor burdened gas permeating into the atmosphere can be minimized while providing the appropriate amount of air that is necessary to maintain the fermentation process. If the air permeability of the cover is too high, as described above, air flow and thus odor emissions cannot be minimized.

Therefore, there is an optimum window of air permeability of the cover tarpaulin that needs to be maintained. The lower limit is essential to keep cost down while opening a reasonable process window. The upper limit ensures control of odor emissions as well as a stable and even fermentation process by avoiding formation of channel flows inside the fermenting bulk matter and maintaining a reasonably accurate correlation between pre-settings of the ventilation devices and resulting air exchange rates.

Experience with covers for box composting shows that during cold weather and/or precipitation the effective air permeability of the known tarpaulins diminishes sharply and formation of seepage and condensate in the fermentation space rises sharply. This means that the fermentation process may not function satisfactorily during the winter months in temperate latitudes or cold climates when using known tarpaulins. Large amounts of organically loaded seepage waters are then formed, which must be sent to costly seepage water treatment and therefore have an unfavorable effect on the operating costs of the installation. Also, under these conditions, the quality of the fermented product is typically compromised and requires added effort and cost in posttreatment.

Commonly used covers for box composting include multi-layered textile laminates according to the following structures; textile woven fabric or non-woven on the outside - microporous intermediate layer - textile woven fabric, non-woven or knitted fabric on the inside. The textile laminates used for box composting so far have been largely identical to the laminates used for covering compost heaps. Such laminates for covering heaps are, for example, described in the German Patent DE 4231414 A1.

The textile/non-woven layers of these tarpaulins serve for achievement of the necessary mechanical properties (tensile strength, abrasion resistance, weathering protection, etc.), whereas the microporous layer serves as the barrier for odors, germs and precipitation water. At the same time, however, the microporous layer also determines the air and water vapor permeability. Due to the geometry and thermodynamics of the box composting process, the requirements for box cover laminates are distinctly different from those for heap covers.

In order to cover a heap of compost, typically 1.0 to 2.0 m² of tarpaulin are used for every m³ of fermenting bulk matter. In contrast, the geometry of composting boxes only allow between 0.5 to 1.0 m² of tarpaulin for every m³ of fermenting bulk matter.

Because the specific oxygen demand of the fermenting bulk matter is largely independent from the composting setup, as long as it is covered, box composting laminates need to exhibit an air permeability that is significantly higher than heap composting laminates. DE 4231414 A1 claims an air permeability of 1 to 15 l / m² / sec at 10 mbar. This is equivalent to 0.7 to 10 m³ / m² / h at 200 Pa. 200 Pa is the maximum desirable pressure head for box composting in terms of cost control. Commercially available heap composting laminates tested for air permeabilities were found to be in the range of 0.5 to 3 m³ / m² / h at 200 Pa pressure gradient applied perpendicular to the tarpaulin..

Due to the specific requirements mentioned for box composting, air permeability at 200 Pa needs to exceed 10 m³ / m² / h to allow the favored intermittent aeration mode throughout the range of air exchange rates necessary to operate and effectively control the process.

During experiments using a cover with an air permeability of 80 m³/m²/h measured at 200 Pa, no pressure build-up greater than 50 Pa could be observed in the gas space underneath the tarpaulin. This was true over the full range of relevant air exchange rates while using a comparatively fine-grain bulk material. Even with coarse fermenting bulk feedstock likely to exhibit the least tendency to form channels of air flow, such as shredded bark or wood chips, air permeability should not exceed 100 m³ / m² / h at 200 Pa to avoid formation of channels and ensure pressure build-up underneath the tarpaulin. Preferably, air permeability should be below 50 m³/m²/h at 200 Pa. This will ensure that the process is controllable even at low air exchange rates.

Despite a temperature of the fermenting product of up to 80°C or so , the temperature in the gas space beneath the tarpaulin is closely linked to ambient temperature. The gas that emerges from the fermenting product into the gas space is saturated with moisture. At outside temperatures below 10°C, significant condensation and mist formation occurs in the gas space, with the result that the textile inside of the known tarpaulins such as described in DE 4231414 A1 become liquid-drenched. This diminishes the air permeability of the laminate. Since the aqueous condensate typically comprises a number of surface active organic compounds, it exhibits a stronger tendency than water to wet the microporous layer, at least to wet the surface of the porous layer that faces the fermenting matter. This can occur, in particular, when after some time organic condensate constituents have deposited in the microporous layer altering the surface properties of the microporous structure. This reduces wetting resistance and liquid entry pressure of the microporous layer to an extent that air permeability becomes adversely affected, especially under cold conditions.

The surface tension of a condensate collected from a pilot scale box composting trial was analyzed to be 42 mN/m, which is considerably lower than water. It is known that an acceptable level of repellency for liquids with surface tensions around 40 mN/m is present on a surface that exhibits an Oil Rating equal to or greater than 1.

Aging of the microporous layer often occurs within a few months of field use if the porous layer also consists of polymers susceptible to degradation caused by weather, UV-light, hydrolysis or microbial attack, for example, a polyurethane coating or polyethylene membrane such as described in DE 4231414 A1. This type of aging also frequently includes that water- and rainproofness of such covers are compromised. All this results in operating problems and increased cost.

A similar reduction in air permeability occurs when the textile outside of the cover tarpaulin is drenched by precipitation water. The resulting water layer, on the one hand, leads directly to a reduction in air permeability of the outside layer. On the other hand, the cooling effect of the precipitation causes an increase in condensation level in the gas space, so that increased moistening of the tarpaulin inside occurs with a corresponding reduction in air permeability. Wetting of the outside cannot be permanently prevented, according to experience, by water-repellent textile finishing since these finishings do not exhibit adequate weather resistance.

Furthermore, DE 4231414 A1 does not specify any water entry pressure. It is known that in order to keep precipitation out, a minimum water entry pressure greater than 20 kPa, preferably greater than 50 kPa needs to be maintained over the lifetime of the tarpaulin.

It is known that many feedstocks for composting or aerobic waste treatment, especially from source- separated collection of household organic wastes, contain amounts of moisture that are not acceptable for any soil amendment product nor for any uncontained processing. Any contained aerobic treatment must therefore have the potential to achieve a significant reduction in moisture of the fermenting bulk material. In box composting, moisture can either diffuse through the tarpaulin or be conveyed out with the air flow permeating through the tarpaulin. Diffusion depends on the temperatures and the gradient of water vapor partial pressure perpendicular to the tarpaulin, and is limited by the Resistance to Moisture Vapor Transmission (Ret) of the tarpaulin. Convection is driven by the total pressure gradient perpendicular to the tarpaulin and is limited by the air permeability of the cover.

Cover materials as described in DE 4231414 A1 analyzed have exhibited Ret-values between 13 to 40 m² Pa/W. Especially during cold ambient conditions, this high resistance to water vapor permeation does not allow enough moisture out of the system. Increasing air permeability of the cover to a sustained higher level alone will not provide a least-cost operating mode under cold/wet conditions. As long as diffusive moisture vapor transmission is impaired by high Ret, a massive increase in air flow would be needed to convey our excessive moisture. This would increase operating cost proportionally as well as the risk of cooling the bulk matter too much by introducing excessive volumes of cold air. With the existing covers, such high airflows are not feasible at the maximum applicable pressures, because the air permeability of the covers is too low. Therefore, a cover that has an increased air permeability according to this invention has to have Ret-values below 15 m² Pa/W, preferably below 10 m² Pa/W are in order to increase diffusion and minimize air flow to the amount needed to supply only the oxygen demand of the fermenting matter. Reducing the air flow also minimizes the emission of odorous substances that are conveyed out with the gas stream permeating through the tarpaulin.

A growing concern with fermentative treatment of organic wastes is the emission of potentially pathogenic microbes such as viable bacteria, fungi, their spores and some of their fragments. It is known from biology and hygiene practice that these germs occur in particle sizes typically greater than 0.5 micrometers. It is therefore reasonable to believe that any system that retains more than 98% of the particulates greater than 0.5 micrometers from a gas stream provides sufficient protection. It is known from membrane filtration of dust from gas streams that a porous film with a mean pore size of 10 micrometers allows retention of more than 98% of particulates greater than 0.5 micrometers. Furthermore, it is known from membrane vents installed into medical devices that these vents are certified to provide sterile filtration for air regarding HIV and Hepatitis viruses as long as the pore size of the porous layer measured as Coulter MFP is below 3 micrometers.

WO 97/15378 relates to an open biofilter for gas purification wherein a cover is made of a laminate comprising at least one microporous functional layer and a carrier layer to which the functional layer is secured. The functional layer can be an expanded polytetrafluoroethylene membrane and the carrier layer can be applied to both sides of the functional layer. The functional layer or the laminate is permeable to gas or air and impermeable towards water such that all the outgoing air from the biofilter can pass through the laminate whilst the moisture is retained in the biofilter.

### SUMMARY OF THE INVENTION

The cover materials of this invention overcome the deficiencies of present cover materials used in aerobic treatment of biodegradable matter.

The cover tarpaulins of this invention provide:
1. Optimum specific air permeability at low overpressures maintained under a wide variety of climatic conditions: This ensures good and even oxygen supply into the fermenting bulk matter at low operating costs and minimal investments for structural gas-proofing.
2. High water vapor permeability, in order to dry moist types of waste (for example, biocans) quickly to the moisture content at which a subsequent treatment becomes feasible in simple setup without any means of containment minimizing investment and operating cost.
3. Reliable sustainment of operationally relevant properties of the laminate, in order to keep maintenance and operating costs, as well as environmentally relevant emissions, to a minimum, and ensure stable, controllable operation independent of ambient conditions.
4. High odor retention in the gas space beneath the tarpaulin: This makes installations with high throughputs eligible for use in odor emission-sensitive locations.
5. Retention of microbes, spores and/or refractory microbial matter, in order to minimize infectious and sensitizing biological emissions.
6. Waterproofness to the degree that no precipitation can ingress through the tarpaulin when installed so that the cover is directly exposed to the atmosphere.
7. An adequate tensile strength to withstand the forces from internal overpressure as well as loads caused by wind, rain and snow wherever the cover is installed.

These goals are achieved by the covers of the invention according to claim 1. The covers comprise a laminate of
1). a porous polymeric layer adhered to
2). at least one selected woven or knit or nonwoven fabric,
in which the laminate has
a) an air permeability of between 10 and 100 m3/m2/hour at 200 Pa pressure difference, preferably 15 to 50 m³/m²/h at 200 Pa
b) an Ret less than 15m² *Pa /W, preferably between 2 and 10 m²Pa/W

In a preferred embodiment of the invention providing waterproofness against precipitation and retention of pathogenic or sensitizing microbial emissions, the laminate will have a water entry pressure of at least 20 kPa, preferably greater 50 kPa, and water entry pressure can be as high as 1 MPa, and the porous layer will have a pore size of between 0.2 to 10µm, preferably 0.3 to 3 µm as determined by the Coulter Test described below. A woven fabric is chosen to provide tensile strength of the laminate exceeding 1000N/5 cm, preferably greater 2000N/5cm.

In use, the porous layer side of the laminate faces the fermenting matter, while the fabric is outermost and is exposed to the atmosphere. However, in cases where mechanical stresses may apply to the side of the laminate facing the fermenting matter, a second fabric layer may be applied to the inside, preferably an openly knitted fabric made from coarse filaments so to minimize capillarity on the side facing the fermenting matter.

### BRIEF DESCRIPTION OF THE DRAWINGS

Figure 1 shows a SEM cross section of laminate 1 as described in the examples. The porous layer (bottom) is shown adhered to a woven fabric.
Figure 2 shows a SEM cross section of laminate 3 as described in the examples. The porous layer (middle) is shown adhered between a woven fabric and a knitted fabric (bottom).
Figure 3 shows a SEM cross section of laminate 4 as described in the examples. The oleophobically coated porous layer (bottom) is shown adhered to a woven fabric.
Figure 4 shows a SEM cross section of laminate 5 as described in the examples, The oleophobically coated porous layer (middle) is shown adhered between a woven fabric (top) and a knitted fabric (bottom).

### DETAILED DESCRIPTION OF THE INVENTION

The covers of this invention combine the proper degree of air permeability with a low resistance to evaporative transmission Ret. Due to this combination, the biological processes of aerobic degradation can be controlled through adjusting the air exchange rate over a wide range without compromising the control of moisture transmission, more specifically the control of any drying processes of the fermenting matter.

This is especially important at low ambient temperatures, typically 5°C or less, that do not permit significant amounts of moisture to be convectively transported through the laminate by the permeating gas stream. Any air exchange rate resulting in a significant convective moisture transport through the cover would cause unwanted cooling of the fermenting material, because large volumes of cold ambient air would be induced into the fermenting material. Under these conditions, the moisture transmission needed to achieve the process goal needs to be realized predominantly by diffusion. This is only possible at Ret-values below 15 m²Pa/W, preferably less than 10 m²Pa/W.

When the convective gas stream is not needed to control moisture transmission, it can be optimally adjusted to control the aerobic process and thus optimize product quality, reduce dwell time or minimize operating cost.

The low resistance to evaporative moisture transport Ret of the covers of this invention is achieved by omitting or minimizing the inside textile layer needed in heap composting for mechanical protection of the porous layer.

In applications where extremely low Ret is required, this may be achieved by minimizing the thickness of the fabric layer through the use of high tenacity fibers such as, but not limited to carbon fiber, and polyamide fiber.

In a preferred embodiment of this invention, where the cover material is used in box composting, the retention of microbial pathogens and irritants is achieved by using a mean pore size of the porous layer no greater than 10 micrometers as defined by the Coulter measurement, preferably smaller than 3 micrometers. Exclusion of rain and other precipitation infiltrating into the fermenting material is achieved by providing a cover material that has a Water Entry Pressure greater than 20 kPa, preferably greater 50 kPa.

In a preferred embodiment of this invention, wetting of the inside of the cover tarpaulin is prevented or reduced by not having a textile inner layer that is present in prior art covers, or by using a sufficiently open knitted fabric that is treated to become oleophobic with Oil Rating greater 1, preferably greater 5, by processes known in the art of textile converting. This inside textile layer may also be replaced by a wide-mesh net or grid, which can be sewn to the actual tarpaulin cover or clamped to it. Such net or grid material may also be bonded to the porous layer by adhesive or thermoplastic means evenly over its entire surface.

An Oil Rating of 1 can be achieved by using a porous membrane made of expanded Polytetrafluoroethylene. Also, the porous structure of the layer can be treated to make it oleophobic enough to have an oil rating > 1, so that wetting and contamination with organic substances is durably prevented. Such treating and agents are described in German Patent Application P 43083692. Preferred are oil ratings greater than 1; ideally an Oil Rating greater than 5 would provide a very good liquid repellency and resistance against contamination with organic substances. Oil ratings equal to or greater than 5 may be achieved on knitted fabric using commercially available fluorocarbon coatings known in textile converting.

Excessive wetting of the outside fabric of the cover by rain can be prevented by using an inherently hydrophobic polymeric material for the yarn used to make the fabric. Such polymers include, for example, Polypropylene, Polyacrylate, Polytetrafluoroethylene or other Fluoropolymers. The yarn is woven so that maximum liquid repellency is achieved without any significantly adverse effect on air permeability.

In the invention, operational reliability of the compost installations is increased substantially and the operating costs are minimized because the formation of an obstructive layer of liquid on or within such covers is avoided or minimized. This is done by using a water-repellent fabric as the outer material and using a hydrophobic/oleophobic or hydrophobically/ oleophobically coated porous layer facing the fermenting product, as well as omitting or minimizing any dense or capillary textile on the side facing the fermenting product. If a textile layer is used on the side facing the fermenting product, it may be treated to provide water and oil repellency. As a result the, covers of this invention maintain a high air permeability under colder and wetter weather conditions than previously possible.

The porous polymeric layer can be made of a polymer which is inherently hydrophobic, such as a fluoropolymer, or can be a membrane not inherently hydrophobic but which has been treated with a water- and oil-repellent polymer to make it hydrophobic and oleophobic. The porous layer can be made of any of a number of synthetic polymers which can withstand long-term continuous contact with liquid water, preferably being resistant against degradation by UV-light and microbial attack. Polymers such as, but not limited to, polyethylene, polypropylene, polyurethane or other polyolefins; polyvinyl chloride, polyvinylidene chloride, polyester, fluoropolymers and the like, are suitable. Fluoropolymers, and polytetrafluoroethylene (PTFE), polyvinyl fluoride (PVF), polyvinylidene fluoride (PVDF) and the like, are preferred for their processing characteristics, temperature resistance, chemical inertness, inertness against microbial attack, resistance to UV-radiation, and inherent hydrophobicity. Most preferred are porous layers of polytetrafluoroethylene.

Porous polytetrafluoroethylene layer suitable for use in the invention can be made by processes known in the art, for example, by stretching or drawing processes, by papermaking processes, by processes in which filler materials are incorporated with the PTFE resin and which are subsequently removed to leave a porous structure, or by powder sintering processes. Preferably the porous polytetrafluoroethylene layer is porous expanded polytetrafluoroethylene layer having a structure of interconnected nodes and fibrils, as described in U.S. Patent Nos. 3,953,566, USP 4,187,390, and USP 4838406, which describe the preferred material and processes for making them.

As stated earlier, the structure defining the pores of the porous layer and/or the porous support layer of the porous cover can be coated with a water- and oil-repellent organic polymer. No particular limitations are imposed on the polymer as long as it provides acceptable levels of water- and oil-repellency, and can be applied so as to form a coating on at least a portion of the structure defining the pores of the porous layer or support material, without causing substantial reduction of the pore volume of the layer or support material or significantly diminishing air flow through the materials. Preferred polymers or copolymers are those having recurring pendent fluorinated organic side chains, or those having fluorine-containing main chains.

Even though the porous layer of the cover can be made of an inherently hydrophobic polymer, it can be desirable to treat the layer with a water- and oil-repellent material to increase its oil-repellency. The reason for this is that watersoluble compounds such as alcohols, fatty acids, lipids, aromatic compounds, watersoluble oils and the like, are typically present in the fermenting bulk organic matter, or may be present in the gases generated by decomposition of the materials. Such compounds have been detected in the gas phase or dissolved in the water condensing on the inside surface of the cover. They can preferentially elute from the condensate to wet and coat the porous surfaces, thus altering the surface free energy of the structure defining the pores and making the layer wettable by liquid water. Liquid water, preferably in the form of condensate containing said surfactant organic compounds, can then penetrate into the pores of the layer, occupy portions of the pore volume, and significantly reduce air and gas permeability through the membrane. Even without penetrating into the pores, such surfactants facilitate wetting of the outer surface of the membrane. This may produce a superficial water layer on the surface of the porous layer. This superficial water layer obstructs gas entry reducing air permeability.

By coating the surfaces of the structure defining the pores so as to make the surfaces oleophobic, the surfactants are prevented from contaminating the surfaces defining porous structure and the condensate is prevented from wetting the surfaces defining the porous structure or the surface of the porous layer.

The layer described and the outward fabric, preferably a polyester or polypropylene or polytetrafluoroethylene woven fabric, are bonded to each other by lamination means. This can be done by softening, i.e., partially melting, the fibers of the textile if made of thermoplastic polymer and bonding it to the membrane, or it may be done using adhesives applied to adhere between fabric and membrane. The adhesives typically used are from the classes of polyurethanes, silicones or polyacrylates, preferentially cross-linked, UV-stable reactive polyurethane hotmelts. Adhesive application can be achieved by means of printing, smear coating or melt blowing. Also, hot-melt adhesives in the form of webs may be used. Preferred is the application of said reactive polyurethane hot-melt adhesives by gravure-dot or gravure-grid lamination. Alternatively, the porous layer may be coated onto the fabric in the form of water-based or solvent based latex or dispersion or a reactive solution or by a phase inversion process using any of the mentioned polymers suitable for the formation of the described porous layer.

The textile face of the laminate thus produced may subsequently be treated for durable water repellency by applying an aqueous base coating of water repellent chemical consisting of fluorocarbons or silicones, preferably fluorocarbons with cross-linking agents such as to maximize durability of water repellent effect.

### TEST DESCRIPTIONS

### Air Permeability - Gurley Number Method

The resistance of samples to air flow was measured by a Gurley densometer (ASTM D726-58) manufactured by W. & L.E. Gurley & Sons. The results are reported in terms of Gurley Number which is the time in seconds for 100 cubic centimeters of air to pass through one square inch of a test sample at a pressure drop of 4.88 inches of water.

### Air Permeability - Textest Method

Air Permeabilities quoted in m³/h Airflow per m² of tarpaulin area were measured using the Textest FX 3300 air permeability tester with a 100 cm² head. This device is designed and used in accordance wit DIN-ISO-EN 9237 (1995). The pressures used in this application range from 100 to 1000 mbar. The pressure is selected so that an airflow within the measuring range of the apparatus is achieved. The sample is pulled tight onto the sample holder and clamped into the apparatus. A green LED indicates when to take the reading from the digital display. The first measurement is done with the air permeable sample by itself in the sample holder, the second is done with a air impermeable sheet on the permeate side of the sample clamped into the device in addition. This second measurement is done to determine the lateral leakage of air through the voids in the textile structure that cannot be sealed by clamping. The actual air permeability is then derived by subtracting the leakage flow from the total flow measured in the first measurement. Depending on the pressure used, the result is then linearly converted to the appropriate air permeability at 200 Pa.

A total of 5 samples distributed over the width of the material is necessary.

### Oil Rating Measurement

Oil rating is measured according to ISO 14419 (September 1998). Oil rating is a manual/visual measurement conducted to quantify the wetting behavior of solid, porous or textile surfaces. It uses a set of aliphatic oils that offer a wide range of surface tensions. The Oil Rating is given according to the highest ranking of these oils that does not wet the surface. The liquids related to the ratings are:
- 0: None (fails white mineral oil)
- 1: Paraffin Oil High Viscosity
- 2: Mixture from 65 % Paraffin Oil HV and 35% n-Hexadecan
- 3: n-Hexadecan
- 4: n-Tetradecan
- 5: n-Dodecan
- 6: n-Decan
- 7: n-Octan
- 8: n-Heptan

Five sessile drops are placed onto a horizontal sample with a distance of 4 cm each and at a 45° angle. Observation time is 30 sec +/- 2 sec, after which each drop is compared with the image given in the mentioned ISO standard. If no wetting of or penetration into the sample is observed, the next higher rated liquid is employed. This process is repeated until wetting or penetration are observed within the 30 sec testing time. A rating is failed when three or more out of the five sessile drops exhibit complete wetting or when capillary effects are observed that annihilate the contact angle between liquid and surface. The Oil rating is given according to the rank of the last liquid that passed for all five drops. In marginal cases a half note may be given, i.e. 3.5. This is described in detail in the ISO-standard.

### Pore Size Measurement

Pore size measurements are made by the Coulter Porometer^{™} manufactured by Coulter Electronics, Inc., Hialeah, FL.

The Coulter Porometer is an instrument that provides automated measurement of pore size distributions in porous media using the liquid displacement method described in ASTM Standard E1298-89.

The Porometer determines the pore size distribution of a sample by increasing air pressure against one side of a sample which has its pores filled with a liquid, and measuring the resulting flow. This distribution is a measure of the degree of uniformity of the membrane (i.e., a narrow distribution means there is little difference between the smallest and largest pore size). It is found by dividing maximum pore size by the minimum pore size. The Porometer also calculates the mean flow pore size. By definition, half of the fluid flow through the porous material occurs through pores that are above or below this size.

All quotations of pore sizes refer to an average Mean Flow Pore Size (MFP), unless explicitly stated.

However, not all conceivable cover laminate materials can be measured using the described Coulter method. This is due to the mechanical structure of some of these laminates and porous layers. In such cases, pore size measurement may be done using microscopy. By evaluating cross sections of either light or scanning electron micrographs with commercially available image processing software, the pores of the porous layer can be measured geometrically. The geometrical pore width equivalent to the Mean Flow Pore Size according to the invention shall have a statistical confidence interval of 90 per cent with regards to a 10 m² sample.

### Tensile Strength

The tensile strength of the laminate samples is measured according to ISO 1421 using an INSTRON Type 4466 tensile tester, equipped with a 10 kN cartridge and computerized data acquisition in a room conditioned to ISO 2231 standard climate (20°C, 65% relative humidity). For each material, five samples are tested in machine and transverse direction each. Sample width is 50 mm, length at least 350 mm and sample is provided yarn-straight. The distance between the clamps is 200mm, load limits, extensions and speed is controlled by the PC. The laminate sample is pretensioned with 2N if sample weight is below 200 g/m², above this 5N pretension is used.

### Water Entry Pressure Test (WEP)

The water entry pressure test is a hydrostatic resistance test which consists essentially of forcing water against one side of a test piece and observing the other side of the test pieces for indications of water penetration through it.

The test specimen was clamped and sealed between rubber gaskets in a fixture that holds the test pieces. The fabric surface of the test specimen was in contact with the water and the other side faced upward, open to the atmosphere, for close observation. Air was removed from inside the fixture and pressure was applied to the inside surface of the test pieces as water was forced against it. The water pressure on the test piece was increased gradually and the upward-facing surface of the test piece was watched closely for the appearance of any water forced through the material. The pressure at which water appears on the upward-facing surface is recorded as the water entry pressure.

### Resistance to Moisture Vapor Transmission Ret

The Ret value is a specific material property of sheet-like structures or material assemblies, which determines the "latent" vaporization heat flux through a given surface resulting from an existing steady-state partial pressure gradient.

The water vapor transmission resistance is determined using the Cup Method using the FIH method which is described in the standard test regulations No. BPI 1.4 dated September 1987 issued by the Bekleidungsphysiologisches Instituts e.V. Hohenstein, Germany.

### EXAMPLES

Several laminates were produced using two different experimental membranes obtained from W.L. Gore & Associates of Newark, Delaware, USA.

Both membranes were produced based on an expanded polytetrafluoroethylene membrane with an average MFP of 0.8 micrometers having a thickness of approximately 50 micrometers and an area weight of approximately 15 grams per square meter.

Membrane 1 was pure expanded PTFE described above. For the examples described herein, a total of three different production batches of the experimental membrane were produced with similar physical properties

Membrane 2 was made by using membrane 1 and coating the surfaces defining the porous structure of the membrane with approximately 5 grams per square meter of a fluoroacrylate containing pendant perfluorinated side groups, thus achieving an Oil Rating of the coated membrane surface of 8. Such flouroacrylates can be obtained from fluorochemical manufacturers such as E.I. DuPont, Asahi Glass Chemical or Hoechst AG.

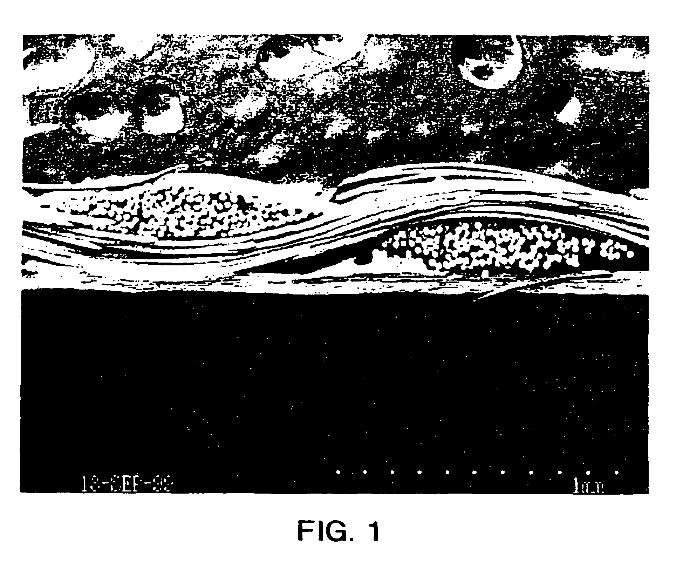

Laminate 1 was made laminating Membrane 1 to a layer of 220 g/m² dyed 1100 dtex high-tenacity polyester 10/10 plain weave fabric obtained from C. Cramer & Co.. Heek-Nienborg, Germany to side to be facing away from the fermenting matter. An SEM of a cross section of laminate 1 is shown in figure 1.

Laminate 2 was made laminating Laminate 1 to the same but undyed polyester plain weave to the side to be facing the fermenting matter.

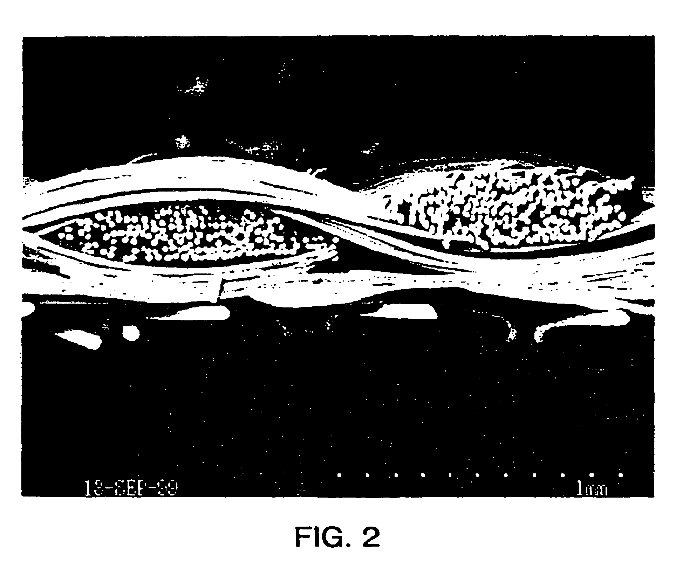

Laminate 3 was made using Laminate 1 and laminating to it a 30 g/m² polyamide mono-filament tricot knit fabric obtained from S & T Barnstaple Ltd., Barnstaple, North Devon, GB onto the side to be facing the fermenting matter. A cross-section of laminate 3 is depicted in the SEM of Fig.2

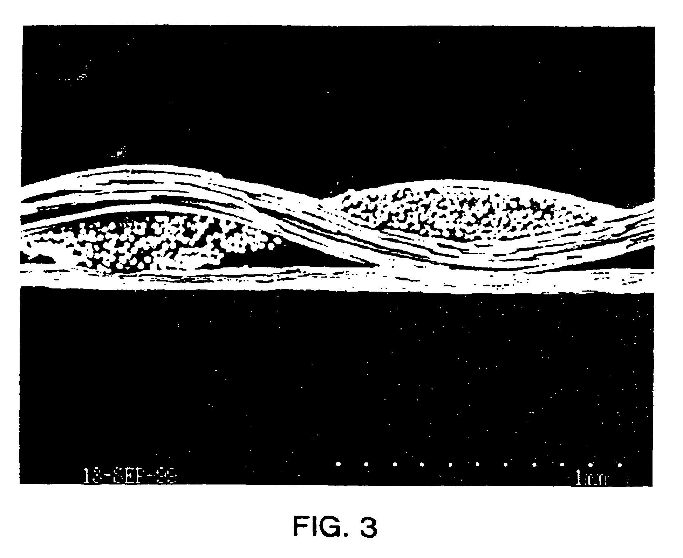

Laminate 4 was made laminating Membrane 2 to a layer of 220 g/m² polyester 10/10 plain weave fabric obtained from C. Cramer & Co., Heek-Nienborg, Germany to side to be facing away from the fermenting matter. A cross section of laminate 4 is depicted in the SEM in figure 3.

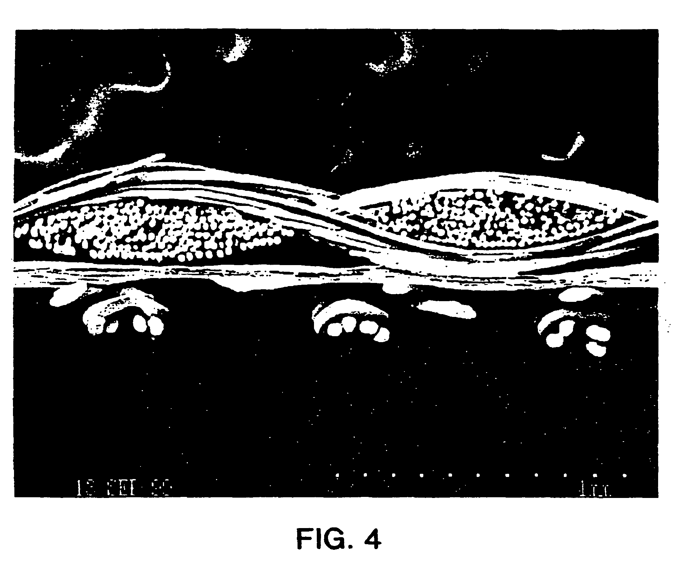

Laminate 5 was made using Laminate 4 and laminating to it a 30 g/m² polyamide monofilament tricot knit fabric obtained from S & T Barnstaple Ltd., Barnstaple, North Devon, England on to the side to face the fermenting matter. A cross section of laminate 4 is depicted in the SEM in figure 4.

All lamination was achieved with dot-gravure print lamination using a cross-linked polyurethane adhesive obtained from W.L. Gore & Associates of Newark, Delaware, USA, at an average adhesive laydown of 8 g/m² for Laminate 2 and an average laydown of 16 g/m², respectively 8 g/m² on each of the two fabric layers, for Laminates 1,3,4,5.

Laminate 2 was produced in two instances in a continuos lamination process using two subsequent printing/laminating steps comprised in a single machine. Laminates 1, 3, 4 and 5 were manufactured in a single lamination run during which the fabrics and membranes were switched accordingly in order to obtain the described laminates

In case of laminates 4 and 5, the side of the membrane to which the fluoroacrylate coating had been applied was laminated facing to the side to face toward the fermenting matter.

Subsequently to lamination, all laminates were dip coated with an aqueous based proprietary mix of commercially available fluorocarbons so that both fabric sides of the laminates were coated to obtain water and oil repellency of the fabric layers. Such mixes of fluorocarbons are known art in textile converting.

| Laminate | Air Permeability [m³/m²/h] @200Pa | Ret [m²/Pa/W] | Pore Size [µm Coulter MFP] | Tensile Strength [N/5cm] | WEP [kPa] | Oil Rating |
|---|---|---|---|---|---|---|
| 1 | 43.1 | 6.2 | 0,7 | 2596 | 68 | 1.5 |
| 2 | 16.6 | 13.7 | 0,7 | 4023 | | |
| 3 | 17.2 | 8.8 | 0,7 | 2622 | 69 | 1.5 |
| 4 | 38.9 | 5.8 | 0,7 | 2796 | 47 | 8 |
| 5 | 20.3 | 7.3 | 0,7 | 3003 | 58 | 5.5 |

Oil rating in this table refers to the side of the laminate facing towards the decomposing material.

## Claims

1. A cover comprising a laminate for the aerobic treatment of biodegradable material, said laminate comprising a porous polymeric layer and having an inner layer and an outer layer, wherein:
a) said inner layer is intended to face the biodegradable material, and said inner layer is hydrophobic and oleophobic and is formed from said porous polymeric layer or a textile layer; and
b) said outer layer is formed from at least one woven, non-woven or knit fabric adhered to said porous polymeric layer;
wherein said laminate has:
i) an air permeability of between 10 and 100 m³/m² hour at 200 Pa pressure difference; and
ii) a water vapour permeability defined by a Ret less than 15 m²Pa/W;
whereby said hydrophobic and oleophobic inner layer prevents or minimises an obstructive layer of liquid forming on or within said cover.

2. The cover of claim I wherein the laminate has a tensile strength greater than 1000 N/5 cm.

3. The cover of claim 1 wherein the fabric comprises a polyester polyacrylate, polypropylene or a fluoropolymer.

4. The cover of any preceding claim, wherein the porous polymeric layer is selected from polyolefins, polyesters, polyvinyl chloride, polyvinylidene chloride, polyurethane or a fluoropolymer.

5. The cover of any of claims I to 3, wherein the porous polymeric layer is porous polytetrafluoroethylene.

6. The cover of any preceding claim, wherein the air permeability is between 15 and 50 m³/m² hour at 200 Pa pressure difference; the water entry pressure is greater than 50 kPa; the Ret is between 2 and 10 m²/PaW; and the average pore size of the porous polymeric layer is between 0.3 and 3 micrometers.

7. The cover of any preceding claim, wherein the inner layer of the laminate facing towards the biodegradable material has an oil rating of at least 1.

8. The cover of any of claims 1 to 6, wherein the inner layer of the laminate facing towards the biodegradable material has an oil rating of at least 5.

9. The cover of claim 1, wherein the porous polymeric layer has an average pore size of between 0.2 and 10 micrometers.

10. The cover of claim 1. wherein the laminate has a water entry pressure greater than 20 kPa.

11. The cover of claim 1, wherein the outer layer of the laminate is made from a water-repellent fabric.

12. The cover of claim 1, wherein the porous polymeric layer or textile layer forming the inner layer is treated to provide water and oil repellency.

13. Use of a cover of any preceding claim in aerobic composting to cover waste material in which the hydrophobic and oleophobic inner layer of the laminate faces the biodegradable material.

14. A method of treating biodegradable matter in aerobic composting, wherein a cover according to any of claims 1 to 12 is placed over the biodegradable matter, and the hydrophobic and oleophobic inner layer faces the biodegradable material.

## Patentansprüche

1. Abdeckung, welche einen Schichtstoff für die aerobe Behandlung von biologisch abbaubarem Material umfasst, wobei der Schichtstoff eine poröse polymere Schicht umfasst und eine innere Schicht und eine äußere Schicht aufweist, wobei
a) die innere Schicht dem biologisch abbaubaren Material gegenüber liegen soll und die innere Schicht hydrophob und oleophob ist und aus der porösen polymeren Schicht oder einer Textilschicht gebildet ist, und
b) die äußere Schicht aus mindestens einem an der porösen polymeren Schicht haftenden Gewebe, Vliesstoff oder Strickgewebe gebildet ist,
wobei der Schichtstoff:
i) eine Luftdurchlässigkeit bei einer Druckdifferenz von 200 Pa zwischen 10 und 100 m³/m²/Stunde aufweist, und
ii) eine Wasserdampfdurchlässigkeit aufweist, die von einem Ret-Wert von weniger als 15 m² Pa/W definiert ist,
wobei die hydrophobe und oleophobe innere Schicht die Bildung einer versperrenden Flüssigkeitsschicht auf oder in der Abdeckung verhindert oder minimiert.

2. Abdeckung nach Anspruch 1, wobei der Schichtstoff eine Zugfestigkeit von mehr als 1000 N/5 cm aufweist.

3. Abdeckung nach Anspruch 1, wobei das Gewebe einen Polyester, ein Polyacrylat, Polypropylen oder Fluorpolymer umfasst.

4. Abdeckung nach einem der vorhergehenden Ansprüche, wobei die poröse polymere Schicht aus Polyolefinen, Polyestern, Polyvinylchlorid, Polyvinylidenchlorid, Polyurethan oder einem Fluorpolymer ausgewählt ist.

5. Abdeckung nach einem der Ansprüche 1 bis 3, wobei es sich bei der porösen polymeren Schicht um Polytetrafluorethylen handelt.

6. Abdeckung nach einem der vorhergehenden Ansprüche, wobei die Luftdurchlässigkeit bei einer Druckdifferenz von 200 Pa zwischen 15 und 50 m³/m²/Stunde liegt, der Wassereintrittsdruck größer als 50 kPa ist, der Ret-Wert zwischen 2 und 10 m²/Pa/W beträgt und der durchschnittliche Porendurchmesser der porösen polymeren Schicht zwischen 0,3 und 3 Mikrometer liegt.

7. Abdeckung nach einem der vorhergehenden Ansprüche, wobei die innere Schicht des dem biologisch abbaubaren Material gegenüber liegenden Schichtstoffes einen Ölwert von mindestens 1 aufweist.

8. Abdeckung nach einem der Ansprüche 1 bis 6, wobei die innere Schicht des dem biologisch abbaubaren Material gegenüber liegenden Schichtstoffes einen Ölwert von mindestens 5 aufweist.

9. Abdeckung nach Anspruch 1, wobei die poröse polymere Schicht eine durchschnittliche Porengröße zwischen 0,2 und 10 Mikrometer aufweist.

10. Abdeckung nach Anspruch 1, wobei der Schichtstoff einen Wassereintrittsdruck von mehr als 20 kPa aufweist.

11. Abdeckung nach Anspruch 1, wobei die äußere Schicht des Schichtstoffes aus einem Wasser abstoßenden Gewebe besteht.

12. Abdeckung nach Anspruch 1, wobei die poröse polymere Schicht oder Textilschicht, welche die innere Schicht bildet, behandelt wird, um Wasser- und Ölabstoßung zu vermitteln.

13. Verwendung einer Abdeckung nach einem der vorhergehenden Ansprüche bei der aeroben Kompostierung, um Abfallmaterial abzudecken, in welcher die hydrophobe und oleophobe innere Schicht des Schichtstoffes dem biologisch abbaubaren Material gegenüber liegt.

14. Verfahren zum Behandeln von biologisch abbaubaren Stoffen bei der aeroben Kompostierung, wobei eine Abdeckung nach einem der Ansprüche 1 bis 12 über die biologisch abbaubaren Stoffe platziert wird und die hydrophobe und oleophobe innere Schicht dem biologisch abbaubaren Material gegenüber liegt.

## Revendications

1. Couvercle comprenant un stratifié en vue du traitement aérobie d'un matériau biodégradable, ledit stratifié comprenant une couche polymère poreuse et ayant une couche interne et une couche externe, dans lequel:
a) ladite couche interne est prévue pour faire face au matériau biodégradable et ladite couche interne est hydrophobe et oléophobe et est formée à partir de ladite couche polymère poreuse ou d'une couche textile; et
b) ladite couche externe est formée à partir d'au moins une étoffe tissée, non tissée ou tricotée adhérant à ladite couche polymère poreuse;
dans lequel ledit stratifié a:
i) une perméabilité à l'air comprise entre 10 et 100 m³/m²/heure à une différence de pression de 200 Pa; et
ii) une perméabilité à la vapeur d'eau définie par une valeur Ret de moins de 15 m² Pa/W;
dans lequel ladite couche interne hydrophobe et oléophobe empêche ou minimise la formation d'une couche obstructive de liquide sur le couvercle ou au sein de celui-ci.

2. Couvercle selon la revendication 1, dans lequel le stratifié a une résistance à la traction supérieure à 1000 N/5 cm.

3. Couvercle selon la revendication 1, dans lequel l'étoffe comprend un polyester, un polyacrylate, un polypropylène ou un fluoropolymère.

4. Couvercle selon l'une quelconque des revendications précédentes, dans lequel la couche polymère poreuse est sélectionnée parmi les polyoléfines, les polyesters, le chlorure de polyvinyle, le chlorure de polyvinylidène, le polyuréthane ou un fluoropolymère.

5. Couvercle selon l'une quelconque des revendications 1 à 3, dans lequel la couche polymère poreuse est du polytétrafluoroéthylène poreux.

6. Couvercle selon l'une quelconque des revendications précédentes, dans lequel la perméabilité à l'air est comprise entre 15 et 50 m³/m²/heure à une différence de pression de 200 Pa; la pression d'entrée d'eau est supérieure à 50 kPa; la valeur Ret est comprise entre 2 et 10 m²/Pa/W; et la taille de pores moyenne de la couche polymère poreuse est comprise entre 0,3 et 3 micromètres.

7. Couvercle selon l'une quelconque des revendications précédentes, dans lequel la couche interne du stratifié faisant face au matériau biodégradable a un taux d'huile d'au moins 1.

8. Couvercle selon l'une quelconque des revendications 1 à 6, dans lequel la couche interne du stratifié faisant face au matériau biodégradable a un taux d'huile d'au moins 5.

9. Couvercle selon la revendication 1, dans lequel la couche polymère poreuse a une taille de pores moyenne comprise entre 0,2 et 10 micromètres.

10. Couvercle selon la revendication 1, dans lequel le stratifié a une pression d'entrée d'eau supérieure à 20 kPa.

11. Couvercle selon la revendication 1, dans lequel la couche externe du stratifié est faite d'une étoffe repoussant l'eau.

12. Couvercle selon la revendication 1, dans lequel la couche polymère poreuse ou la couche textile formant la couche interne est traitée pour fournir une aptitude à repousser l'eau et de l'huile.

13. Utilisation d'un couvercle selon l'une quelconque des revendications précédentes dans un compostage aérobie pour couvrir un matériau de déchets dans laquelle la couche interne hydrophobe et oléophobe du stratifié fait face au matériau biodégradable.

14. Procédé de traitement de la matière biodégradable dans le compostage aérobie, dans lequel un couvercle selon l'une quelconque des revendications 1 à 12 est placé au-dessus de la matière biodégradable et dans lequel la couche interne hydrophobe et oléophobe fait face au matériau biodégradable.
